# EUROPEAN PATENT SPECIFICATION

(11) **EP 2 136 517 B1**
(45) Date of publication and mention of the grant of the patent: **13.11.2013**
(21) Application number: 09162573.1
(22) Date of filing: 12.06.2009
(51) Int. Cl.: H04L 12/58, H04W 4/14

(54) **Short message delivery**
Lieferung von Kurznachrichten
Livraison de messages courts

(30) Priority: 19.06.2008 FI 20085626
(43) Date of publication of application: 23.12.2009
(73) Proprietor: TeliaSonera AB, 106 63 Stockholm (SE)
(72) Inventor: Poikela, Antti, 02150, Espoo (FI); Pihlajamäki, Antti, 00580, Helsinki (FI); Laukkanen, Jussi, 00240, Helsinki (FI)
(74) Representative: Kolster Oy Ab

(56) References cited:
- EP-A- 1 507 420
- EP-A- 1 763 185
- WO-A-03/085911
- US-A1- 2005 185 634
- US-A1- 2008 113 679

## Description

### FIELD OF THE INVENTION

The present invention relates to short messages (SM) in a communications system, and more particularly to interworking between an instant message domain and a short message domain.

### BACKGROUND OF THE INVENTION

An instant messaging (IM) service enables online subscribers to exchange messages via the Internet. Under most conditions, instant messaging is truly "instant", and even during peak Internet usage periods, the delay is rarely more than a couple of seconds. In order to become a successful service, mobile IM service should be able to inter-work with current systems, such as a short message service (SMS). This means that a user should be able to use the service for communicating with his/her contacts irrespective of their capabilities or the technology used (i.e. IM-to-SMS and SMS-to-IM). The mobile IM should be able to reuse existing per message charging models, and project user experience of conventional messaging technologies such as SMS. In this context, the evolution of SMS towards IP based application technologies and new terminal equipment technologies is also referred to as a "future operator messaging service" (FOMS) concept.
US 2005/185634 discloses a solution of providing network support for messaging between short message service subscribers and instant messaging subscribers, In order to support delivery of short messages to the IM side, the mobile switching center is adjusted to_check_the destination address of a received message and determine whether it is a mobile telephone number. If the number is a mobile telephone number, the short message will be delivered conventionally, but if not the message is routed to a data gateway arranged between the mobile switching center and IM packet data network.
EP 1507420 discloses a solution where the switching center determines whether a text message arriving for a user is to be sent to the user through the wireless telephone network, through the internet messaging in client or both.

Instant messages sent from the IM infrastructure can quite easily be forwarded to conventional SMS users as well as to offline IM users. An attempt to send a message to someone who is not online, or who is not willing to accept messages, will result in a notification that the transmission cannot be completed. This IM-to-SMS backwards compatibility can be implemented using, for example, a universal computer protocol (UCP) or a hypertext transfer protocol (HTTP) interface between an IM server and a short message service centre (SMSC). In such a case, the IM server converts the instant messages to short messages if they cannot be delivered as instant messages (i.e. in a situation where a called party is offline or s/he does not have the IM capability). The converted instant messages are pushed to SMSC for delivery to the called party.

However, in the other direction, i.e. from SMS to IM, problems arise. For the user experience to be as good as possible, the user should be able to use an IM client as his/her only messaging tool. Therefore a system should be able to route a textual short message sent from the SMS infrastruc- to the IM server. Then the IM server should be able to forward the short message as an instant message to the IM user.

A problem to be solved is therefore how the short messages addressed to the IM user can be routed to the IM server in such a way that "normal" (SMS user destined) short messages still remain intact.

One possibility to implement the SMS-to-IM interworking regarding the FOMS concept involves routing of messages to an instant messaging and presence service (IMPS) based on a home location register (HLR) and/or SMSC. This HLR based approach has been proposed by a number of vendors, and it involves changing the provisioning of the subscriber (in HLR) such that all short messages addressed to a certain MSISDN (mobile subscriber international integrated services digital network number) are sent to the IM server. Based on a response to a sendRoutinglnformationForSM query sent by HLR, SMS routes IM user destined short messages to the IM server. The SMS user just sends a short message using the MSISDN of the IM user, and the short message arrives at the IM user's IM client. This solution, however, involves a number of problems. The described functionality is not implemented in HLR, i.e. it is not possible to set a location [i.e. a GT (global title) address of a serving MSC (mobile switching centre)] of a given user, in this case the IM user, to any fixed value to be used only when responding to the sendRoutinglnformationForSM query. In addition, regular voice calls and data SMS messages should not be routed to the IM server. Further, the IM servers do not necessarily have a GT address, or the IM servers may not be able to communicate using SS7 MAP (signalling system No. 7) or SIGTRAN (signalling transport) protocol. Therefore the SMSC software would need to be modified in order to be able to analyse a sendRoutingInformationForSM response. Yet further, implementation at an inter-operator interconnection may be difficult. It seems that a short message originated from a first domestic or foreign operator's network may be forwarded to an MSC serving the user at second operator's network without traversing through the second operator's SMSC. In such a case, the special GT address in the HLR may cause a problem, as well as delivery reporting.

Another possibility to implement the SMS-to-IM inter-working regarding the FOMS concept involves alternative routing numbers, for example, an IMPS prefix + MSISDN, or some other identification. A number of vendors have proposed prefix-based routing alternatives in order to enable the routing of short messages to the IM server. This is carried out by configuring the IM server to use a prefix + MSISDN of the sender in the originating address of a mobile-terminated short message. The prefix is a short code that SMSC associated with the IM server is able to understand. This means that the receiver receives the message from the prefix + MSISDN when it cannot be delivered as an instant message. If this MSISDN is already stored in the user's address book, the handset will show an SMS coming from a respective contact name even though the phone number includes the prefix. With this approach the SMS user can reply to a message and a short message will be sent back to the IM server via SMSC. This approach enables SMS replies to be converted to IMs, but it is not suitable for the SMS users to initiate IM dialogues as the user has to write the short message with the prefix + MSISDN. The user would not be able to initiate e.g. voice or video calls during the IM dialogue due to a "false" contact number. Vendors have also proposed using an identification number instead of MSISDN. Such approach enables a basic SMS-to-IM delivery but otherwise encounters problems similar to those involved in the MSISDN approach. Thus the prefix-based routing mechanisms may only be considered as a solution suitable for non-commercial services, such as trials, since the end-user experience decreases significantly compared to current messaging services [i.e. SMS and MMS (multimedia messaging service)].

The 3rd Generation Partnership Project (3GPP) has specified a "service level interworking" between SMS and SMS-over-IP (∼ Instant Message) in the technical specification 3GPP TS 23.204 V8.2.0 (2008-06). This solution is based on introduction of a new and potentially expensive network element (IP-Short-Message-Gateway, IP-SM-GW) with a SS7 (Signalling System 7) signalling support.

WO 2008/096042 discloses a system arranged to recognise a short message that is transmitted from an SMS user to an IM user, by checking, in a transfer node, on the basis of a received SMS routing inquiry, whether or not the called party is capable of using instant messaging. In addition, it may be checked, in an IM server, whether or not the called party is currently online. If the called party is currently online, an instant messaging server transmits, towards the transfer node, a routing response including routing information on the instant messaging server. This routing information can then be delivered to a short message centre for the delivery of the actual short message. An advantage of this solution is that it enables short messages that are sent to an IM user to be identified and routed to an IM server while all normal (SMS user-destined) SMS traffic is kept intact. In addition, this can be carried out transparently, so that the IM user does not notice any difference between SMS-originated and IM-originated messages received by the IM user. The SMS return path can be implemented for backwards compatibility. The disadvantage of also this solution is that requires the SS7 support in IMS application server, which is potentially expensive solution and also could introduce delays in a production process.

### BRIEF DESCRIPTION OF THE INVENTION

It is thus an object of the present invention to provide a new method for implementing an interworking between different message services. The objects of the invention are achieved by the subject matter recited in the attached independent claims. Preferred embodiments of the invention are disclosed in the dependent claims.

According to an aspect of the invention a network entity is provided, comprising
an interworking part providing interworking between an instant message (IM) domain and a short message (SM) domain, and
a home subscriber database part arranged to provide home subscriber database functionality for the short message domain side, said home subscriber database part being arranged to, in response to a short message center or other network element requesting a routing information for delivering short messages to a recipient user, to return its own routing address that is capable of accepting short messages and performing the SM-IM interworking, if the recipient user is provisioned to a IM service, and to return a normal SM delivery address, if the recipient user is not provisioned to a IM service, the network entity being arranged to keep mapping between interrelated SM and IM messages so that when a response arrives from the IM domain side, the network entity is able to convert it back to the SM domain.

According to another aspect of the invention a method for delivering messages is provided, comprising
combining an interworking functionality providing interworking
between an instant message (IM) domain and a short message (SM) domain, and home subscriber database functionality of the short message domain side,
receiving with said combined functionality from a short message center or other network element a request for routing information for delivering short messages to a recipient user,
checking with said combined functionality whether the recipient user is provisioned to a IM service or not,
returning with said combined functionality its own routing address that is capable of accepting short messages and performing the SM-IM interworking, if the recipient user is provisioned to a IM service, and
returning with said combined functionality a normal SM delivery address as a routing information, if the recipient user is not provisioned to a IM service,
maintaining with said combined functionality a mapping between interworked SM and IM messages, and
upon receiving a IM response message from the IM domain side, converting the received IM message into a SM message and sending the converted message to the SM domain based on said mapping information.

An advantage of the invention is that SS7 support is not require in the in the IMS. The approach according to the invention is also more flexible to support various new messaging services, e.g. services involving multi-SIMs. In the present invention, if there is no need of interworking, the message will not have to pass through the interworking part at all, because the home subscriber database part will return routing address for another network element.BRIEF DESCRIPTION OF THE DRAWINGS

In the following, the invention will be described in greater detail by means of preferred embodiments and with reference to the accompanying drawings, in which
Figure 1 illustrates a communications system according to the present invention;
Figure 2 illustrates signalling according to a first embodiment of the present invention;
Figure 3 illustrates signalling according to a second embodiment of the present invention;
Figure 4 illustrates signalling according to a third embodiment of the present invention;
Figure 5 illustrates signalling according to a fourth embodiment of the present invention;
Figure 6 illustrates signalling according to a fourth embodiment of the present invention; and
Figure 7 illustrates signalling according to a fourth embodiment of the present invention.

### DETAILED DESCRIPTION OF THE INVENTION

The IM architecture is quite complex and it may include several reference points to an IM client, IM server and IM XDMS [XML (extensible markup language) data management server], and also to external entities, such as an SIP/IP core, shared XDMS, aggregation proxy, presence entities, charging enabler and device management server services, to provide an overall functionality of a SIMPLE IM enabler. The IM service is dependent on an underlying SIP infrastructure transporting SIP messages between the IM entities. The architecture may be an SIP/IP core including an IP multimedia subsystem.

An instant messaging and presence service (IMPS) is an OMA (open mobile alliance) enabler designed for exchanging messages and presence information between mobile clients, and also between mobile and fixed clients. Use cases include: add contact by IMPS user-ID or MSISDN, search by contact details or public profile, send instant message, extend IM to a private group conversation, participate in IM to a private group conversation, add or update public profile, locate friend, auto registration and login, advanced search, multiple applications/sessions, remote user session management, sending an announcement in a chatting mode. Presence is a key-enabling technology for IMPS. It involves client device availability ("my phone is on/off", "in a call"), user status (available, unavailable, in a meeting), location, client device capabilities (voice, text, GPRS, multimedia), and searchable personal statuses such as mood (happy, angry) and hobbies (football, computing, dancing). Since the presence information is personal, it may be made available according to the user's wishes; access control features allow the users control their presence information. The instant messaging (IM) is applicable to both mobile and desktop worlds. Desktop IM clients, two-way SMS, and two-way paging use the instant messaging. The IMPS client includes but is not limited to mobile hand-held and fixed terminals. IM has important functions similar to PoC. Deferred messaging is a receiver service in a terminating network. The deferred messaging guarantees that a receiver receives his/her messages, even if offline, by storing the receiver's message on a deferred function. The service is in the terminating network as the storage and manipulation of messages is a service the user's home operator is likely to be able to charge for. The user's own service provider is able to provide privacy and availability. The pager mode can utilize the deferred messaging.

One of the main principles of the FOMS concept is that the service aims to be user-centric rather than device- or technology-centric (i.e. the FOMS concept is not limited to instant messaging on mobile devices). However, the FOMS concept is an evolution of the SMS service/product concept towards IP based application technologies and towards new terminal equipment technologies. The idea of the FOMS concept is to compete with other IP based communication services on the basis of following key value propositions: backwards compatibility to existing communication services, communication security, real customer-identity based communication, viable and healthy transaction based charging model, and/or device independency allowing the service to be genuinely user-centric. However, device independency should not compromise the listed key value proposition elements.

In the following, example embodiments of the invention will be described with reference to a third generation mobile communications system, such as UMTS (universal mobile communications system), 3GPP-IMS, or 3GPP2-IMS. This invention is not, however, meant to be restricted to these embodiments. Consequently, the invention may be applied to any mobile communications system that provides a GPRS-type packet switched radio service capable of transmitting packet-switched data. Examples of other systems include the IMT-2000 and its evolution techniques [such as 3GPP LTE (Long term evolution), Beyond-3G, 4G], IS-41, GSM, or the like, such as the PCS (Personal Communication System) or DCS 1800 (Digital Cellular System for 1800 MHz). The specifications of mobile communications systems and particularly those of the IMT-2000 and the UMTS advance rapidly. This may require additional changes to the invention. For this reason, the terminology and expressions used should be interpreted in their broadest sense since they are meant to illustrate the invention and not to restrict it. The relevant inventive aspect is the functionality concerned, not the network element or equipment where it is executed.

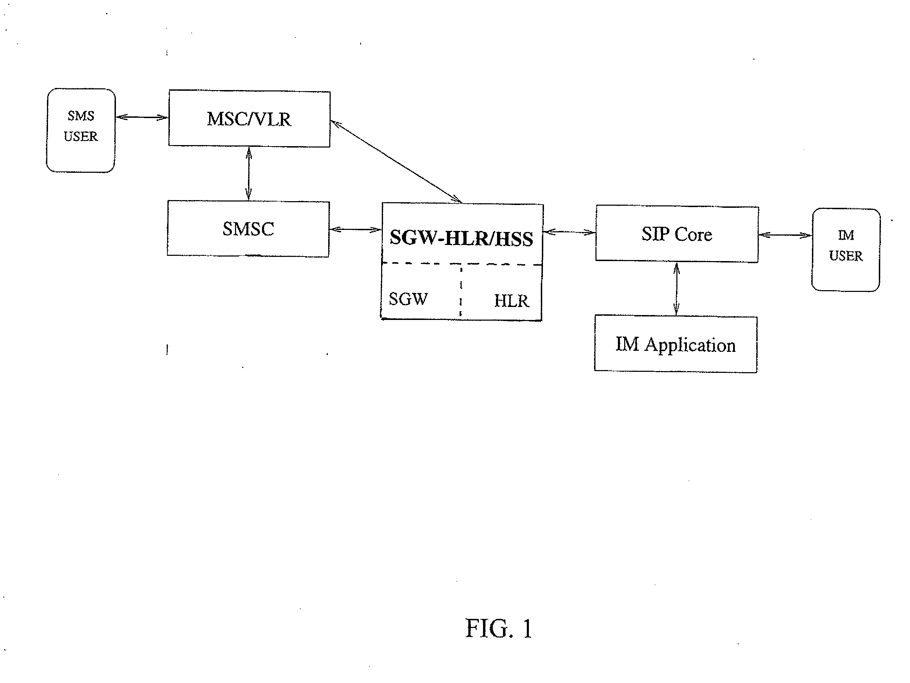

Figure 1 illustrates a communications system according to an example embodiment such that only elements needed for describing the invention are included. It is apparent to a person skilled in the art that a mobile communications system may also comprise other functions and structures that need not be described in greater detail in this context. The communications system comprises a first user terminal UE_{SMS} capable of using a short message service, and a second user terminal UE_{IM} capable of using an instant messaging service. The idea of the present invention is to configure the system to operate in a desired way in a situation where a message is transmitted from the first user terminal UE_{SMS} to the second user terminal UE_{IM}, or in the opposite direction. Therefore, the system may comprise network elements that are however not necessarily mandated by the present invention. In the example embodiment shown in Figure 1, the system may comprise a mobile switching centre MSC (and an associated Visitor Location Register), a home location register HLR, a short message service centre SMSC, an IMS core network (or similar SIP supporting core network) and an instant messaging IM application server.

According to an aspect of the invention, the interworking between the instant message IM domain, or generally SIP based message domain, and the short message service SMS domain, or generally a mobile text message service domain using a mobile subscriber identity number (e.g. MSISDN, is provided with an IM-SMS interworking function which is integrated with a home location register HLR (and possibly home subscriber register HSS function) into a single logical network entity, referred to as an SGW-HLR/HSS herein. The IM-SMS interworking function may be a signalling gateway SGW which is able to transfer signalling messages between different protocols, such as SIP and SS7. A single logical network entity means that although the SGW-HLR/HSS may be implemented to comprise several different network components, it is a single logical entity with proprietary internal interfaces. SGW-HLR/HSS is adapted to communicate with both SMS and IM domains. SGW-HLR/HSS may be arranged to make all necessary message conversions when passing messages between these two domains. On the other hand, according to preferred embodiments of the invention, a network intelligence and a store-and-forward functionality may be located in the SMS and IM domains, so that SGW-HLR/HSS merely passes the messages according to a set of predefined rules. In an embodiment of the invention, In the case of a communication failure on either side, SGW-HLR/HSS may have a fallback mechanism that ensures message delivery even in error situations.

On the SMS domain side, the SGW-HLR/HSS according to the invention includes HLR functionality or similar home database functionality. The HLR functionality may be part the HSS, and there may be different HLR functionalities circuit switched (CS) and packet switched (PS) SMS domains. From the remaining network point of view, the HLR functionality appears as a normal HLR. All signalling between the HLR functionality of the SGW-HLR/HSS and the SMSC, or any other network entity, is standard signalling, e.g. SS7. When the SMSC, or any other network entity, requests for an address that can be used to deliver short messages, the HLR within SGW-HLR/HSS returns an appropriate address depending on whether the recipient user has IM provisioning, i.e. is using the IM service or not If the mobile user (to which the short message is addressed to) has no IM provisioning, a normal SMS delivery address is returned (e.g. the address of the current MSC or SGSN). If the user is provisioned to IM service, the SGW-HLR/HSS returns an address (e.g. SGW address) within itself that is capable of accepting short messages and performing the SMS-IM interworking. In the latter case, the SMSC sends the short message with the SGW address to the SGW-HLR/HSS without needing to know that the SGW function is actually in the same logical entity SGW-HLR/HSS as the HLR which returned the delivery address. When the SMSC has sent a short message to the SGW-HLR/HSS, it handles the message using pre-defined rules, usually sending it to a component within the IM domain. The SGW-HLR/HSS may keep mappings between SMS and IM messages so that when a response arrives from the IM side, SGW-HLR/HSS can convert it back to the SMS domain. On the IMS side, the SGW-HLR/HSS can communicate with IMS using SIP or any other IM protocol. The SGW-HLR/HSS may have a set of predefined SIP messages and corresponding actions which will be used when deciding how to answer to each message. When an instant message is sent to the IM domain, the IMS know when message conversion is required. If there is no need of interworking, the message may not pass through the SGW-HLR/HSS at all. For example, an IM application server may send the short message to the SMSC directly as an UCP short message. The SGW-HLR/HSS may need to communicate only with one IMS entity, the actual message delivery decisions can be made in the IMS. In other words, network intelligence and a store-and-forward functionality may be located in the IM domain.

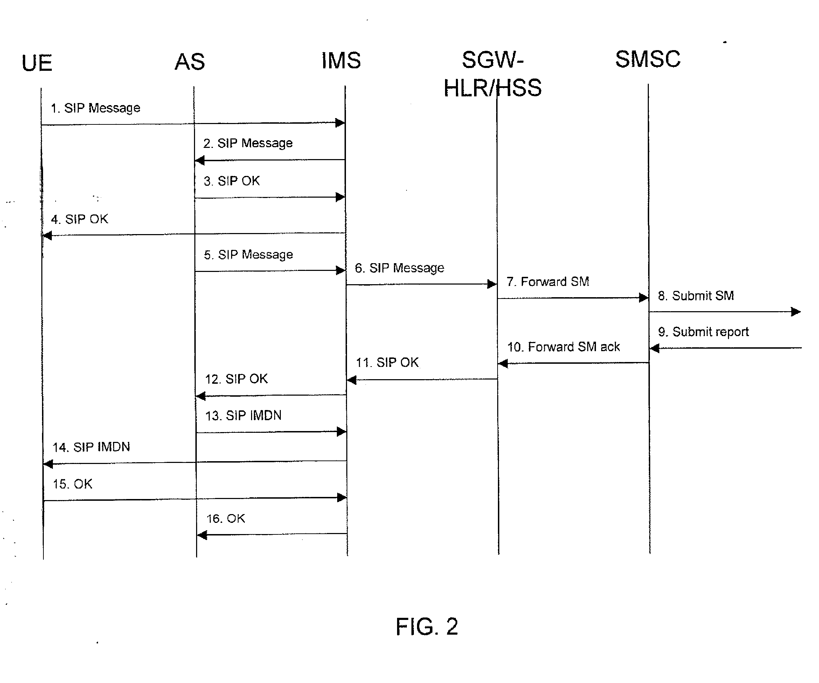

Figure 2 illustrates signalling according to a first exemplary embodiment of the present invention. In Figure 2, a registered IM user with user equipment UE sends an instant message to a legacy SMS user. The user sending the message does not need to know that the recipient's UE is capable of receiving only SMS messages. The UE sends a SIP message (containing the IM message) to the IMS which forwards the SIP Message to an application server AS. The AS acknowledges with SIP OK which forwarded also to the sending UE. The AS determines that the SMS message must be sent to a receiving user instead of an IM message and interworking is required, and therefore sends the SIP Message to the SGW-HLR/HSS via the IMS. Upon receiving the SIP Message, the SGW-HLR/HSS converts the IM message (e.g. SIP Message) into a Forward SM message which will be sent to the SMSC. The SMSC submits the short message to the UE of the receiving user and receives a Submit report after a successful delivery. The SMSC sends a Forward SM ack message to the SGW-HLR/HSS which converts the message into a SIP OK message which is then sent to the IMS and further to the application server AS. The AS sends a SIP IMDN message (Instant Message Disposition Notification) to the IMS and further to the sending UE which acknowledges with a SIP OK message.

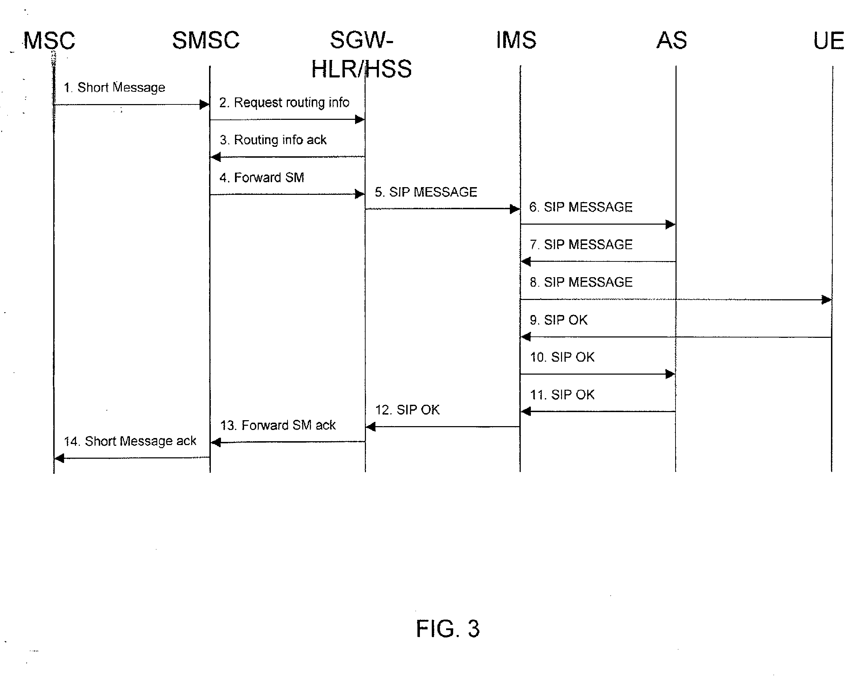

Figure 3 illustrates signalling according to a second exemplary embodiment of the invention wherein a legacy SMS user sends a message to an IM user and the message is delivered instantly. The sender does not need to know what kind of messages the recipient UE can receive. The sender UE (not shown) sends a short message to the MSISDN number of the recipient, and the short message is routed to the SMSC. The SMSC sends a routing information request (e.g. using the SS7 protocol) to the HLR of the recipient user, i.e. to the HLR function in the SGW-HLR/HSS in this example. The HLR function within the SGW-HLR/HSS may check whether the recipient user has the IM provisioning, i.e. registered with and using the IM service. The HLR function then returns an appropriate address that can be used to deliver short messages, based on the IM provisioning of the recipient user. More specifically, if the user has no IM provisioning, a normal SMS delivery address (e.g. MSC or SGSN address) is returned to the SMSC will be returned in the Routing info acknowledgement message, and the SMSC will forward the short message directly to this address (e.g. to the serving MSC or SGSN) as in the legacy system (this procedure is not shown in Figure 3). However, if the recipient user is provisioned to the IM service, the HLR in the SGW-HLR/HSS will return an address (e.g. SGW address) within itself that is capable of accepting short messages. Consequently, the SMSC will send a Forward SM message (containing the initial short message) to the SGW in the SGW-HLR/HSS. The SGW may convert the received Forward SM message into a SIP Message message. The SGW-HLR/HSS may handle the received Forward SMS message using pre-defined rules, usually sending it to a component within the IMS. The predefined rules may define, for example, that a received Forward SMS message that is not from a short number and includes only textual information is converted into a SIP Message message with a IM application server as a recipient and the converted SIP Message is sent to a SIP server in the IMS network. The SGW-HLR/HSS may also store information on the sent message (i.e. the Forward SM and the associated SIP Message) in a database until a SIP acknowledgement is received for the sent message. The IMS network routes the SIP message to the IM application server AS which delivers the SIP Message via the IMS to the recipient IM UE. The recipient UE acknowledges the IM message with the SIP OK message which is delivered via the AS and the IMS to the SGW-HLR/HSS. When the SGW-HLR/HSS receives the SIP OK message from the IMS, the SGW-HLR/HSS may check whether the received SIP OK message is associated with (mapped to) any earlier sent SIP message stored in the database. If the SIP OK message is a reply to one of the earlier SIP messages stored in the database, the SGW-HLR/HSS converts it into a positive SMS Delivery Report (Forward SM acknowledgement). The found earlier SIP Message is mapped to one of the earlier Forward SM messages stored in the database, and the source address of that earlier Forward SM message may be used as a destination address for the Forward SM acknowledgement. The stored information may now be deleted from the database. The Forward SM acknowledgement may be sent based on the obtained address to the SMSC which may deliver the SM acknowledgement to the sending UE as conventionally in the SMS service.

Similarly, if the SIP message received from the IMS indicates a failure of the message delivery, the SGW-HLR/HSS may check whether the received SIP message is associated with (mapped to) any earlier sent SIP message stored in the database. If the SIP message is a reply to one of the earlier SIP messages stored in the database, the SGW-HLR/HSS converts it into a SMS Failure Report. The found earlier SIP Message is mapped to one of the earlier Forward SM messages stored in the database, and the source address of that earlier Forward SM message may be used as a destination address for the Failure Report. The stored information may now be deleted from the database. The Failure report may be sent based on the obtained address to the SMSC which may deliver it to the sending UE UE as conventionally in the SMS service.

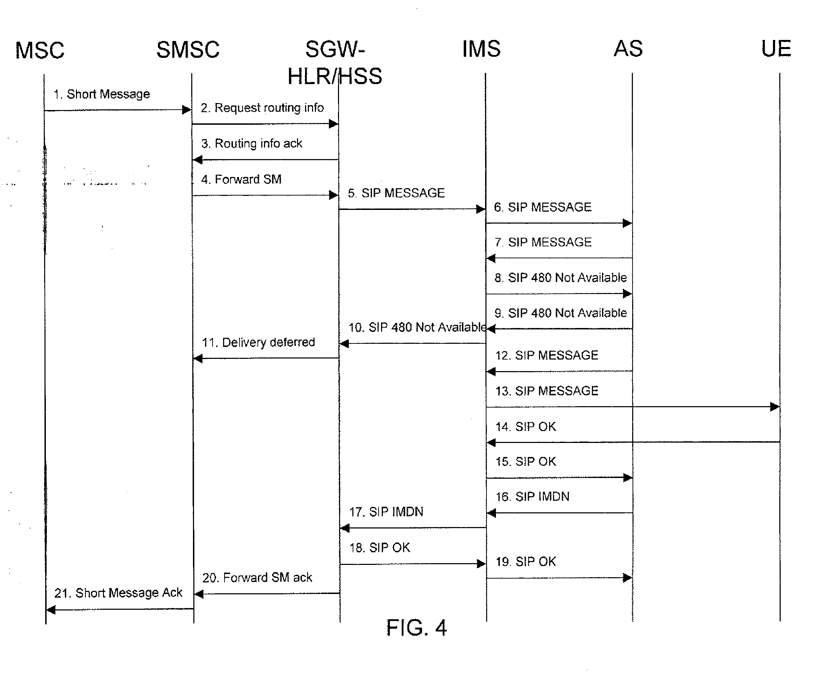

Figure 4 illustrates signalling according to a second exemplary embodiment of the invention wherein a legacy SMS user sends a message to an IM user and the message delivery is deferred (delayed). The procedure may proceeds as described above with reference to Figure 3 until the SIP Message is sent from the application server AS to the IMS (message 7 in Figures 3 and 4). Now the IMS may observe that the recipient IM user is not currently available (this is a conventional procedure in IMS) and send a SIP 480 Not Available message to the AS which may further send this message to the SGW-HLR/HSS via the IMS. When the SGW-HLR/HSS receives the SIP 480 Not Available message from the IMS, the SGW-HLR/HSS may check whether the received SIP 480 Not Available message is associated with (mapped to) any earlier sent SIP message stored in the database. If the SIP 480 Not Available message is related to one of the earlier SIP messages stored in the database, the SGW-HLR/HSS converts it into a SMS Delivery Deferred message. The found earlier SIP Message is mapped to one of the earlier Forward SM messages stored in the database, and the source address of that earlier Forward SM message may be used as a destination address for the SMS Delivery Deferred message. The stored information is not deleted from the database. The SMS Delivery Deferred message may be sent based on the obtained address to the SMSC.

Later the application server AS succeeds to deliver the IM message to the recipient UE (messages 12 and 13 in Figure 4) and the acknowledgement signalling (messages 14-21 Figure 4) may then proceed in a similar manner as described above with reference to Figure 3 (messages 9-14 in Figure 3).

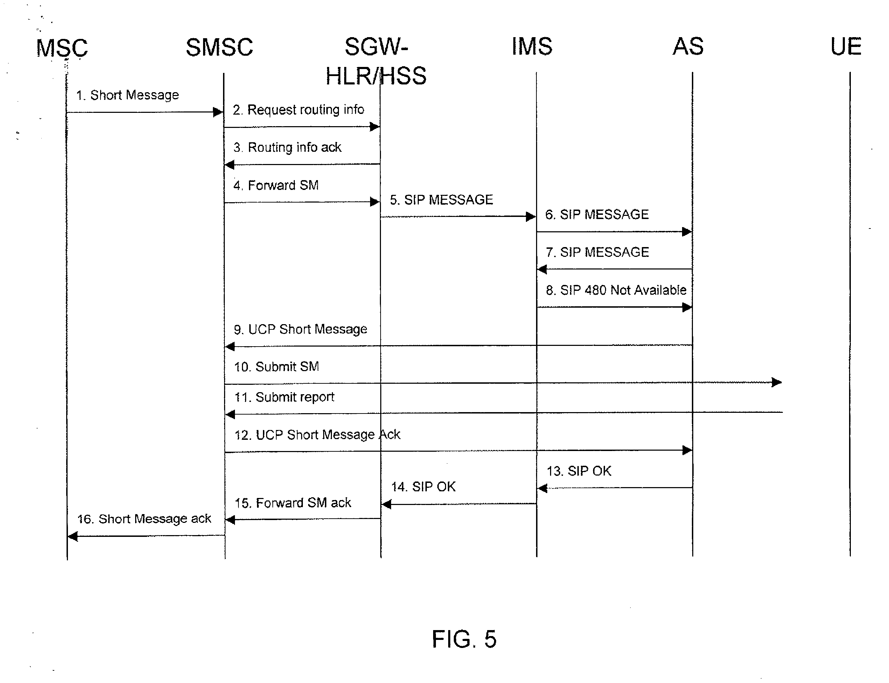

Figure 5 illustrates signalling according to a third exemplary embodiment of the invention wherein a legacy SMS user sends a message to an IM user, the IM message fails, and a fallback delivery using the SMS is performed. The procedure may proceeds as described above with reference to Figure 3 until the SIP Message is sent from the application server AS to the IMS (message 7 in Figures 3 and 5). Now the IMS may observe that the recipient IM user is not currently available (this is a conventional procedure in IMS) and send a SIP 480 Not Available message to the AS. The AS may determine (e.g. from a profile of the recipient IM user) that SMS can be used as a secondary or fallback delivery route. Consequently, the AS may send a Universal Computer Protocol (UCP) short message to the SMSC. Then the SMSC submits the short message to the recipient UE using the SMS service, and receives a Submit Report message from the recipient UE. Upon receiving the Submit Report the SMSC may send a UCP Short Message Acknowledgement to the application server AS. The AS may then initiate the acknowledgement signalling (messages 13-16 in Figure 5) that may be similar to the signalling described above with reference to Figure 3 (messages 9-14 in Figure 3).

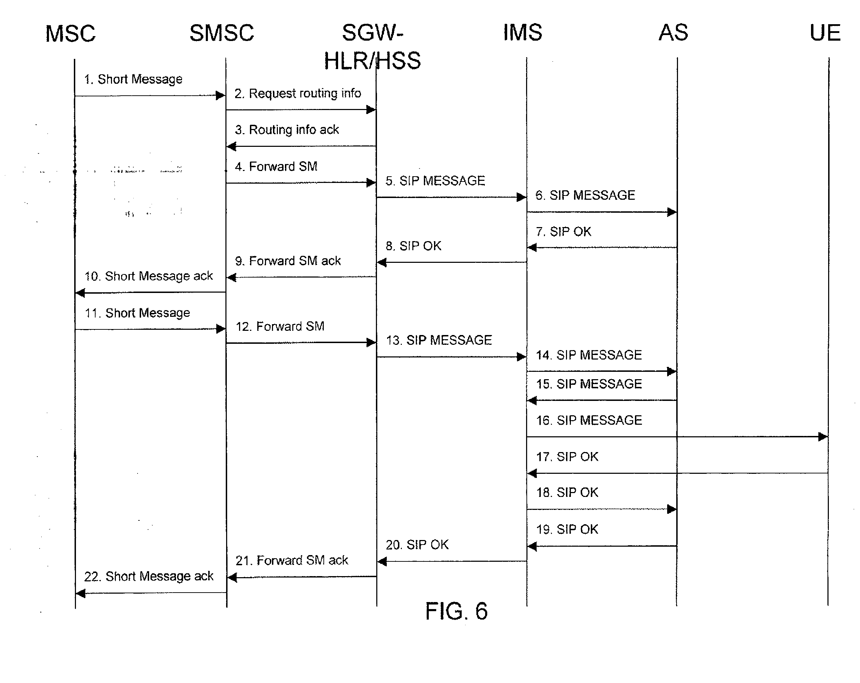

Figure 6 illustrates signalling according to a fourth exemplary embodiment of the invention wherein a legacy SMS user sends a concatenated SMS message to an IM user. One SMS message can contain only 140 bytes of data. If a legacy SMS user equipment UE sends a larger message, it is segmented into several parts at the originating (sending) side and reassembled again to one large message at the terminating (receiving) side. If a legacy SMS UE sends such a message to an IM UE, the IM UE will receive the message as one instant message, without requiring the client to reassemble the message from multiple segments. When the first one of the concatenated SMS is sent, the procedure may proceed as described above with reference to Figure 3 until the SIP Message is received at the application server AS (message 6 in Figures 3 and 6). The AS may observe that this is a concatenated message, stores the first part of the message, and then initiates an acknowledgement signalling (messages 7-10 in Figure 6) that may be similar to the signalling described above with reference to Figure 3 (messages 9-14 in Figure 3), except that the message information in the SGW-HLR/HSS is not deleted. Upon receiving the SM acknowledgement for the first SMS, the sending UE sends the second one of the concatenated SMSs in a similar manner as the first one (messages 11-14 in Figure 6).

If there are more than two SMS messages in the concatenated message, the above signalling (messages 7-14) is repeated until all parts of the concatenated message have been received at the application server. In the illustrated example, the concatenated message comprises to SMSs. Upon receiving all parts of the concatenated message the AS reassembles the large message and sends it in a SIP Message to the recipient IM UE through the IMS. Upon receiving SIP OK acknowledgement from the recipient IM UE, the AS may initiate the acknowledgement signalling (messages 18-22 in Figure 6) that may be similar to the signalling described above with reference to Figure 3 (messages 9-14 in Figure 3).

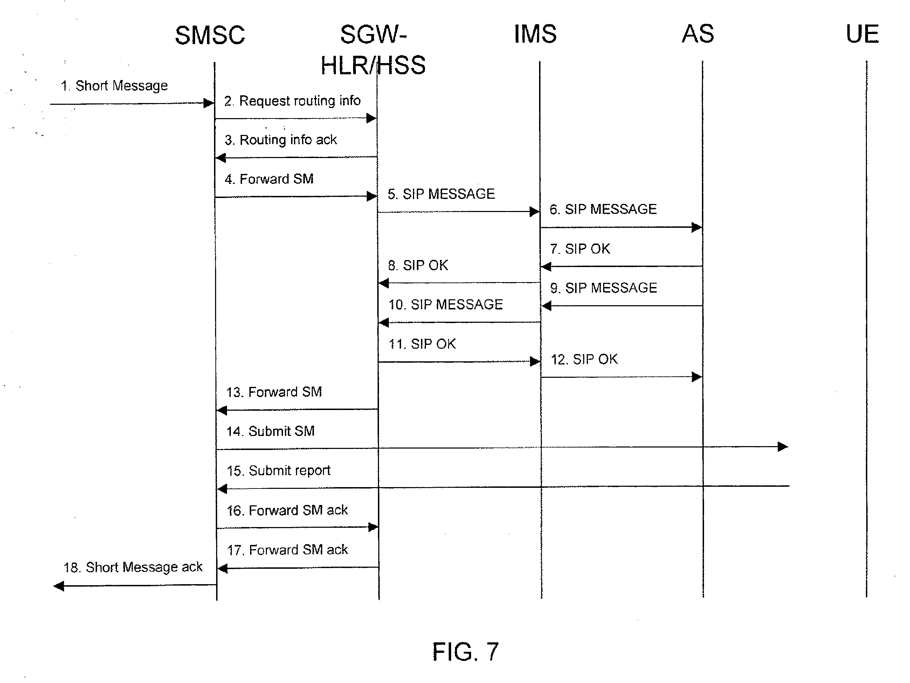

Figure 7 illustrates signalling according to a fifth exemplary embodiment of the invention wherein an IM UE receives a special message requiring an SMS delivery. The SMSC may receive (e.g. from a legacy SMS UE) a short message that is a special message, e.g. Over the Air (OTA) provisioning message. The SMSC is not interesting in the type or content of the short message but may request and receive routing information from the SGW-HLR/HSS in a similar manner as in Figure 3. Then the SMSC sends the Forward SM message to the obtained routing address, i.e. to the SGW-HLR/HSS, and the procedure may proceed in a similar manner as described above with reference to Figure 3 until the SIP Message is received at the application server AS (message 6 in Figures 3 and 6). The AS may acknowledge the receipt with a SIP OK that is forwarded to the SGW-HLR/HSS. The AS may observe that this is a special message having a functionality that works only when sent as an SMS message. Thus, instead of sending the message as an IM message to the UE, the AS decides to use the SMS delivery and send the message in a SIP Message back to the SGW-HLR/HSS via the IMS. The SGW-HLR/HSS may acknowledge with a SIP OK that is forwarded to the AS. The SGW-HLR/HSS may convert the IM message (e.g. SIP Message) into a Forward SM message which will be sent to the SMSC. The SMSC submits the short message to the UE of the receiving user and receives a Submit report after a successful delivery. The SMSC sends a Forward SM ack message to the SGW-HLR/HSS. The then sends a Forward SM message to the SMSC which may send a Short Message acknowledgement to the SMS originator.

The signalling messages and steps shown in Figures 2, 3, 4, 5 and 6 are simplified and only aim at describing the idea of the invention. Other signalling messages may be sent and/or other functions carried out between the messages and/or the steps. The signalling messages serve only as examples and they may contain only some of the information mentioned above. The messages may also include other information, and the titles of the messages may deviate from those given above.

A system or system network nodes that implement the functionality of the invention may comprise means for processing short messages and/or routing data in a manner described above. Network nodes and user terminals comprise processors and memory that can be utilized in the operations of the invention. The invention may be implemented by means of software routines run on a computer/processor and/or routines included in application specific integrated circuits (ASIC) and/or programmable circuits, such as EPLDs (Electrically Programmable Logic Device) or FPGAs (Field Programmable Gate Array).

While particular example embodiments according to the invention have been illustrated and described above, it will be clear that the invention can take a variety of forms and embodiments within the scope of the appended claims.

## Claims

1. A network entity (SGW-HLR/HSS), comprising
an interworking part providing interworking between an instant message IM domain and a short message SM domain, and
a home subscriber database part arranged to provide home subscriber database functionality for the short message domain side, **characterized by**
said home subscriber database part being arranged, in response to a short message center or other network element requesting a routing information for delivering short messages to a recipient user (UE)
to check whether the recipient user (UE) is provisioned to an IM service;
to return a routing address of an element that is within the network entity (SGW-HLR/HSS) and capable of accepting short messages and performing the SM-IM interworking, if the recipient user (UE) is provisioned to an IM service, and
to return a normal SM delivery address, if the recipient user (UE) is not provisioned to an IM service,
wherein the network entity (SGW-HLR/HSS) is arranged to keep mapping between interrelated SM and IM messages so that when a response arrives from the IM domain side, the network entity (SGW-HLR/HSS) is able to convert it back to the SM domain.

2. A network entity (SGW-HLR/HSS) according to claim 1, **characterized in that** said interworking part is arranged to provide a signalling gateway functionality.

3. A network entity (SGW-HLR/HSS) according to claim 1 or 2, **characterized in that** said home subscriber database part is arranged to provide a home location register functionality.

4. A network entity (SGW-HLR/HSS) according to claim 1, 2 or 3, **characterized in that** the home subscriber database part is arranged to provide different home location register functionalities in circuit switched CS and packet switched PS SMS domains.

5. A network entity (SGW-HLR/HSS) according to any one of claims 1 to 4, **characterized in that** the network entity (SGW-HLR/HSS) is arranged to merely pass the messages between the IM and SM domain according to a set of predefined rules.

6. A network entity (SGW-HLR/HSS) according to any one of claims 1 to 5, **characterized in that** the network entity (SGW-HLR/HSS) comprises a fallback mechanism that ensures message delivery in the case of a communication failure on the IM or SM domain side.

7. A network entity (SGW-HLR/HSS) according to any one of claims 1 to 6, **characterized in that** the network entity (SGW-HLR/HSS) is arranged to communicate on the IM domain side using SIP or any other IM protocol.

8. A network entity (SGW-HLR/HSS) according to claim 7, **characterized in that** the network entity (SGW-HLR/HSS) comprises a set of predefined SIP messages and corresponding actions which are used when deciding how to answer to a received message.

9. A method for delivering messages, **characterized by** comprising:
combining an interworking functionality providing interworking between an instant message IM domain and a short message SM domain, and home subscriber database functionality of the short message domain side,
receiving with said combined functionality from a short message center or other network element a request for routing information for delivering short messages to a recipient user (UE),
checking with said combined functionality whether the recipient user (UE) is provisioned to a IM service or not,
returning with said combined functionality a routing address of the combined functionality that is capable of accepting short messages and performing the SM-IM interworking, if the recipient user (UE) is provisioned to an IM service, and
returning with said combined functionality a normal SM delivery address as a routing information, if the recipient user (UE) is not provisioned to an IM service,
the method further comprising
maintaining with said combined functionality a mapping between interworked SM and IM messages,
upon receiving a IM response message from the IM domain side, converting the received IM message into a SM message and sending the converted message to the SM domain based on said mapping information.

10. A method according to claim 9, **characterized by** further comprising
receiving with said combined functionality a short message to said routing address of the combined functionality from the SM domain,
interworking with said combined functionality said received short message to an IM message.

11. A method according to any one of claims 9 to 10, **characterized by** further comprising
using with the combined functionality SIP or any other IM protocol for communication on the IM domain side.

12. A method according to claim 11, **characterized by** further comprising
having with the combined functionality a set of predefined SIP messages and corresponding actions,
receiving a SIP message received from the IM domain,
searching the SIP message from said set of predefined SIP messages,
reacting to said received SIP message with the action corresponding to said search SIP message.

13. A software product, **characterized by** further comprising computer-readable program code means that, when run on a computer, perform the method according to any one of claims 9 to 12.

## Patentansprüche

1. Netzentität (SGW-HLR/HSS) mit
einem Interworking-Teil, das Interworking zwischen einer Sofortnachrichten IM -Domäne und einer Kurznachrichten SM -Domäne bereitstellt, und
einem Heimatteilnehmerdatenbankteil, das angeordnet ist, der Kurznachrichtendomänenseite eine Heimatteilnehmerdatenbank-Funktionalität zur Verfügung zu stellen, **dadurch gekennzeichnet, dass**
das besagte Heimatteilnehmerdatenbankteil angeordnet ist, als Reaktion darauf, dass ein Short Message Center oder ein anderes Netzelement Routing-Informationen zur Lieferung von Kurznachrichten an einen Empfänger-Benutzer (UE) anfordert,
zu überprüfen, ob der Empfänger-Benutzer (UE) für einen IM-Dienst ausgerüstet ist;
eine Routing-Adresse eines Elements, das innerhalb der Netzentität (SGW-HLR/HSS) ist und Kurznachrichten akzeptieren und das SM-IM-Interworking ausführen kann, zurückzusenden, falls der Empfänger-Benutzer (UE) für einen IM-Dienst ausgerüstet ist, und
eine normale SM-Lieferungsadresse zurückzusenden, falls der Empfänger-Benutzer (UE) für einen IM-Dienst nicht ausgerüstet ist,
wobei die Netzentität (SGW-HLR/HSS) angeordnet ist, Mapping zwischen zusammenhängenden SM- und IM-Nachrichten fortzusetzen, so dass, wenn eine Antwort von der IM-Domänenseite ankommt, die Netzentität (SGW-HLR/HSS) sie wieder in die SM-Domäne umwandeln kann.

2. Netzentität (SGW-HLR/HSS) nach Anspruch 1, **dadurch gekennzeichnet, dass** das besagte Interworking-Teil angeordnet ist, eine Signalisierungs-Gateway-Funktionalität bereitzustellen.

3. Netzentität (SGW-HLR/HSS) nach Anspruch 1 oder 2, **dadurch gekennzeichnet, dass** das besagte Heimatteilnehmerdatenbankteil angeordnet ist, eine Heimatregister-Funktionalität bereitzustellen.

4. Netzentität (SGW-HLR/HSS) nach Anspruch 1, 2 oder 3, **dadurch gekennzeichnet, dass** das Heimatteilnehmerdatenbankteil angeordnet ist, unterschiedliche Heimatregister-Funktionalitäten in leitungsvermittelten CS und paketvermittelten PS SMS-Domänen bereitzustellen.

5. Netzentität (SGW-HLR/HSS) nach einem der Ansprüche 1 bis 4, **dadurch gekennzeichnet, dass** die Netzentität (SGW-HLR/HSS) angeordnet ist, lediglich die Nachrichten zwischen der IM- und SM-Domäne gemäß einer Reihe von vorbestimmten Regeln zu übermitteln.

6. Netzentität (SGW-HLR/HSS) nach einem der Ansprüche 1 bis 5, **dadurch gekennzeichnet, dass** die Netzentität (SGW-HLR/HSS) einen Sicherungsmechanismus aufweist, der die Lieferung von Nachrichten im Falle eines Kommunikationsfehlers auf der IM- oder SM-Domänenseite sicherstellt.

7. Netzentität (SGW-HLR/HSS) nach einem der Ansprüche 1 bis 6, **dadurch gekennzeichnet, dass** die Netzentität (SGW-HLR/HSS) angeordnet ist, auf der IM-Domänenseite anhand eines SIP- oder irgendeines anderen IM-Protokolls zu kommunizieren.

8. Netzentität (SGW-HLR/HSS) nach Anspruch 7, **dadurch gekennzeichnet, dass** die Netzentität (SGW-HLR/HSS) eine Reihe von vorbestimmten SIP-Nachrichten und entsprechenden Aktionen aufweist, die verwendet werden, wenn entschieden wird, wie auf eine empfangene Nachricht geantwortet wird.

9. Verfahren zur Lieferung von Nachrichten, **dadurch gekennzeichnet, dass** dabei:
eine Interworking-Funktionalität, die Interworking zwischen einer Sofortnachrichten IM -Domäne und einer Kurznachrichten SM -Domäne bereitstellt, und eine Heimatteilnehmerdatenbank-Funktionalität der Kurznachrichtendomänenseite kombiniert werden,
mittels der besagten kombinierten Funktionalität von einem Short Message Center oder einem anderen Netzelement eine Anforderung für Routing-Informationen zur Lieferung von Kurznachrichten an einen Empfänger-Benutzer (UE) empfangen wird,
mittels der besagten kombinierten Funktionalität überprüfen wird, ob der Empfänger-Benutzer (UE) für einen IM-Dienst ausgerüstet ist oder nicht,
mittels der besagten kombinierten Funktionalität eine Routing-Adresse der kombinierten Funktionalität, die Kurznachrichten akzeptieren und das SM-IM-Interworking ausführen kann, zurückgesendet wird, falls der Empfänger-Benutzer (UE) für einen IM-Dienst ausgerüstet ist, und
mittels der besagten kombinierten Funktionalität eine normale SM-Lieferungsadresse als Routing-Informationen zurückgesendet wird, falls der Empfänger-Benutzer (UE) für einen IM-Dienst nicht ausgerüstet ist,
wobei weiterhin
mittels der besagten kombinierten Funktionalität Mapping zwischen zusammenhängenden SM- und IM-Nachrichten aufrecht erhalten wird,
nachdem eine IM-Antwortnachricht von der IM-Domänenseite empfangen wird, die empfangene IM-Nachricht in eine SM-Nachricht umgewandelt wird und die umgewandelte Nachricht an die SM-Domäne aufgrund der besagten Mapping-Informationen gesendet wird.

10. Verfahren nach Anspruch 9, **dadurch gekennzeichnet, dass** dabei weiterhin
mittels der besagten kombinierten Funktionalität eine Kurznachricht an der besagten Routing-Adresse der kombinierten Funktionalität von der SM-Domäne empfangen wird,
mittels der besagten kombinierten Funktionalität die besagte empfangene Kurznachricht mit einer IM-Nachricht verknüpft wird.

11. Verfahren nach einem der Ansprüche 9 bis 10, **dadurch gekennzeichnet, dass** dabei weiterhin
mittels der kombinierten Funktionalität ein SIP- oder irgendein anderes IM-Protokoll für die Kommunikation auf der IM-Domänenseite verwendet wird.

12. Verfahren nach Anspruch 11, **dadurch gekennzeichnet, dass** dabei weiterhin
mittels der kombinierten Funktionalität eine Reihe von vorbestimmten SIP-Nachrichten und entsprechenden Aktionen vorhanden sind,
eine von der IM-Domäne empfangene SIP-Nachricht empfangen wird,
die SIP-Nachricht unter der besagten Reihe von vorbestimmten SIP-Nachrichten gesucht wird,
auf die besagte empfangene SIP-Nachricht mit der Aktion reagiert wird, die der besagten SIP-Suchnachricht entspricht.

13. Softwareprodukt, **dadurch gekennzeichnet, dass** es weiterhin computerlesbare Programmcodemittel aufweist, die, wenn sie auf einem Computer ablaufen, das Verfahren nach einem der Ansprüche 9 bis 12 ausführen.

## Revendications

1. Entité réseau (SGW-HLR/HSS), comprenant :
une partie échange fournissant un échange entre un domaine de message instantané IM et un domaine de message court SM ; et
une partie base de données d'abonnés mobiles agencée pour fournir une fonctionnalité de base de données d'abonnés mobiles du côté domaine de message court, **caractérisée en ce que** :
ladite partie base de données d'abonnés mobiles est agencée, en réponse à un centre de message court ou à tout autre élément de réseau demandant des informations de routage pour remettre des messages courts à un utilisateur destinataire (UE), de façon à :
vérifier si l'utilisateur destinataire (UE) dispose d'un service IM ;
renvoyer une adresse de routage d'un élément qui se situe à l'intérieur de l'entité réseau (SGW-HLR/HSS) et est capable de recevoir des messages courts et d'exécuter l'échange SM-IM, si l'utilisateur destinataire (UE) dispose d'un service IM ; et
renvoyer une adresse de remise de SM normale, si l'utilisateur destinataire (UE) ne dispose pas d'un service IM ;
dans lequel l'entité réseau (SGW-HLR/HSS) est agencée pour maintenir un mappage entre des messages SM et IM échangés de telle sorte que, lorsqu'une réponse arrive en provenance du côté domaine IM, l'entité réseau (SGW-HLR/HSS) peut la convertir de nouveau vers le domaine SM.

2. Entité réseau (SGW-HLR/HSS) selon la revendication 1, **caractérisée en ce que** ladite partie échange est agencée pour fournir une fonctionnalité de passerelle de signalisation.

3. Entité réseau (SGW-HLR/HSS) selon la revendication 1 ou 2, **caractérisée en ce que** ladite partie base de données d'abonnés mobiles est agencée pour fournir une fonctionnalité d'enregistreur de localisation nominal.

4. Entité réseau (SGW-HLR/HSS) selon la revendication 1, 2 ou 3, **caractérisée en ce que** la partie base de données d'abonnés mobiles est agencée pour fournir des fonctionnalités d'enregistreur de localisation nominal différentes dans les domaines SMS à commutation de circuits CS et à commutation de paquets PS.

5. Entité réseau (SGW-HLR/HSS) selon l'une quelconque des revendications 1 à 4, **caractérisée en ce que** l'entité réseau (SGW-HLR/HSS) est agencée pour passer simplement les messages entre le domaine IM et le domaine SM selon un ensemble de règles prédéfinies.

6. Entité réseau (SGW-HLR/HSS) selon l'une quelconque des revendications 1 à 5, **caractérisée en ce que** l'entité réseau (SGW-HLR/HSS) comprend un mécanisme de secours qui assure la remise d'un message en cas d'une panne de communication du côté du domaine IM ou du côté du domaine SM.

7. Entité réseau (SGW-HLR/HSS) selon l'une quelconque des revendications 1 à 6, **caractérisée en ce que** l'entité réseau (SGW-HLR/HSS) est agencée pour communiquer du côté du domaine IM en utilisant un protocole SIP ou tout autre protocole IM.

8. Entité réseau (SGW-HLR/HSS) selon la revendication 7, **caractérisée en ce que** l'entité réseau (SGW-HLR/HSS) comprend un ensemble de messages à protocole SIP prédéfinis et qui correspondent à des actions utilisées lors d'une décision concernant la façon de répondre à un message reçu.

9. Procédé destiné à remettre des messages, **caractérisé en ce qu'**il comprend :
la combinaison d'une fonctionnalité d'échange fournissant un échange entre un domaine de message instantané IM et un domaine de message court SM, et d'une fonctionnalité de base de données d'abonnés mobiles du côté du domaine de message court ;
la réception, avec ladite fonctionnalité combinée, en provenance d'un centre de message court ou de tout autre élément de réseau, d'une demande d'informations de routage pour remettre des messages courts à un utilisateur destinataire (UE) ;
le fait de vérifier, avec ladite fonctionnalité combinée, si l'utilisateur destinataire (UE) dispose ou pas d'un service IM ;
le renvoi, avec ladite fonctionnalité combinée, d'une adresse de routage de la fonctionnalité combinée qui est capable de recevoir des messages courts et d'exécuter l'échange SM-IM, si l'utilisateur destinataire (UE) dispose d'un service IM ; et
le renvoi, avec ladite fonctionnalité combinée, d'une adresse de remise de SM normale en tant qu'informations de routage, si l'utilisateur destinataire (UE) ne dispose pas d'un service IM ;
le procédé comprenant en outre :
le maintien, avec ladite fonctionnalité combinée, d'un mappage entre les messages SM et IM échangés ;
lors de la réception d'un message de réponse IM en provenance du côté du domaine IM, la conversion du message IM reçu en un message SM et l'envoi du message converti au domaine SM sur la base desdites informations de mappage.

10. Procédé selon la revendication 9, **caractérisé en ce qu'**il comprend en outre :
la réception, avec ladite fonctionnalité combinée, d'un message court à ladite adresse de routage de la fonctionnalité combinée en provenance du domaine SM ;
la réalisation d'un échange, avec ladite fonctionnalité combinée, entre ledit message court reçu et un message IM.

11. Procédé selon la revendication 9 ou 10, **caractérisé en ce qu'**il comprend en outre :
l'utilisation, avec la fonctionnalité combinée, d'un protocole SIP ou tout autre protocole IM pour une communication du côté du domaine IM.

12. Procédé selon la revendication 11, **caractérisé en ce qu'**il comprend :
le fait de disposer, avec la fonctionnalité combinée, d'un ensemble de messages SIP prédéfinis et d'actions correspondantes ;
la réception d'un message SIP reçu en provenance du domaine IM ;
la recherche du message SIP dans ledit ensemble de messages SIP prédéfinis ;
la réaction audit message SIP reçu avec l'action correspondant audit message SIP de recherche.

13. Produit logiciel, **caractérisé par le fait qu'**il comprend en outre des moyens de code de programme lisibles par un ordinateur qui, lorsqu'ils sont exécutés par un ordinateur, exécutent le procédé selon l'une quelconque des revendications 9 à 12.
